# NEW EUROPEAN PATENT SPECIFICATION

(11) **EP 0 767 762 B2**
(45) Date of publication and mention of the opposition decision: **02.05.2007**
(45) Mention of the grant of the patent: 31.03.1999
(21) Application number: 95924235.5
(22) Date of filing: 14.06.1995
(51) Int. Cl.: C03C 1/02, C03C 13/06, C03B 1/02

(54) **PRODUCTION OF MINERAL FIBRES**
HERSTELLUNG VON MINERALFASERN
PRODUCTION DE FIBRES MINERALES

(30) Priority: 15.06.1994 GB 9412007
(43) Date of publication of application: 16.04.1997
(60) Divisional application: 96203486.4
(73) Proprietor: Rockwool International A/S, 2640 Hedehusene (DK)
(72) Inventor: SORENSEN, Lone, Moller, DK-Birkerod (DK); CHRISTENSEN, Vermund, Rust, DK-4000 Roskilde (DK); JENSEN, Soren, Lund, DK-2840 Holte (DK); HOYER, Hans, DK-4000 Roskilde (DK); HELDGAARD, Thomas, DK-2630 Taastrup (DK); Faarborg, Jorgen, Porthcawl, Mid Glamorgan CF36 3LB (GB); Sweeny, Philip, Brynmenyn, Mid Glamorgan CF32 9AQ (GB)
(74) Representative: Lawrence, Peter Robin Broughton
(86) International application number: PCT/EP1995/002306
(87) International publication number: WO 1995/034514

(56) References cited:
- EP-A- 0 115 817
- EP-A- 0 155 439
- EP-A- 0 467 739
- EP-A- 0 596 088
- WO-A-92/04289
- WO-A-93/22251
- WO-A-94/14717
- DE-A- 2 536 122
- DE-A- 4 306 438
- FR-A- 2 690 438
- GB-A- 230 306
- GB-A- 2 181 449
- US-A- 2 578 110
- US-A- 4 720 295
- Komarek, K.R.,Chem.Eng.,1987,Dec.4. "Selecting Binders and lubricants for Agglomeration Processes", Chemical Engineering
- Ullmann's Encyclopedia of Industrial Chemistry, 4th ed., 1990, vol. A15, pages 317-324

## Description

This invention relates to the production of man-made vitreous fibres (MMVF). In particular, it relates to a method comprising forming a melt by melting in a furnace a mineral charge which includes moulded briquettes of particulate inorganic material and forming MMV fibres from the melt. The charge may consist solely of moulded briquettes or it may comprise a mixture of briquettes with other inorganic material. The invention also relates to novel briquettes.

Many methods are known for forming shaped bonded bodies of particulate mineral material. For instance mineral ore can be pelletised by being tumbled with a binder in the presence of moisture, and moulded briquettes can be made by various techniques. A general review of these moulding techniques was given by John D Higginbotham at a meeting in Seattle USA in October 1993 in a paper entitled "Molasses as an Environmentally Acceptable Briquette and Agglomerate Binder". In this paper Dr Higginbotham reviewed the use of, for instance, starch, polyvinyl alcohol, lignin sulphonate, lime, resins and molasses as binders for briquetting a range of inorganic particulate materials.

In particular, he described that molasses had been used as a binder in coal briquettes but gave poor green strength unless performance was improved by an additive, and that the use of molasses with lime resulted in increased green strength but gave weakened briquettes upon subsequent oven curing. He describes the use of phosphoric add as an additive for improving the performance of molasses but also examined various other additives. He commented that when agglomerating carbon black, lignin begins to decompose at 250°C but that molasses withstood a temperature of 300°C. He also commented that steel fines waste could be agglomerated using a molasses-lime binder but that the resultant lumps can only be used for recycling the fines to the basic oxygen iron ore furnace since the higher temperatures of about 1100°C in a steel making blast furnace would generate fines. Also, it seems that the molasses lime binder also includes some phosphoric acid.

In US 2,578,110 briquettes of glass batch are moulded from very finely divided inorganic material, water and optionally glucose, bentonite or other material as binder, and are then heated in an oven for 1/2 hour to 3 hours. The resultant briquettes are melted in a tank to provide a glass melt. In US 2.970,924, lignosulphonic acid salts are used as binder in the pelletising of glass batch for the manufacture of fibre glass. Accordingly this does not involve making briquettes by moulding. The intention is that the pellets will melt faster and more evenly and that there will be improved heat transfer through the melted batch. The briquettes and pellets in these two references are added into the melt and do not have to be significantly self-supporting while they are melting.

In conventional furnaces for providing the melt from which MMV fibres are formed, the melt Is made by melting in the furnace a self-supporting column of solid coarse mineral material. This solid coarse material can consist of raw crushed rock but often comprises briquettes formed of finer particulate mineral material. It is necessary that the column shall be self-supporting in order to hold the solid material above melt in the base of the furnace. It is therefore necessary that any briquettes which are included in the charge should retain their integrity while being heated up to near the melt temperatures (which exceed 1,000°C). Disintegration of the briquettes at lower temperatures, of only a few hundred °C, is unsatisfactory since the briquettes will disintegrate into powder and the column of coarse material will tend to collapse resulting in increased resistance to the combustion air, increased pressure and pressure variations In the bottom disturbing the flow of melt through the outlet

It is therefore necessary that the briquettes should be heat resistant in the sense that the briquettes retain their briquette structure for as long as possible while they are being heated in the furnace up towards the melting temperature. It is also necessary that it should be possible to make the briquettes by a simple process that avoids the long (several days) curing time needed for hydraulic binders. It would be desirable for the briquettes to have a high green strength, that is to say it would be desirable to be able to handle the briquettes very soon after manufacture, without any curing process and without risk of the fresh briquettes disintegrating.

In US 2,976,162, briquettes are formed using a mixture of clay (such as bentonite) and starch. Although these may be intended to give adequate green strength and strength in the furnace (due to the clay) this system appears to be unsatisfactory and has not been widely adopted. Instead, the attainment of adequate heat resistance and strength has conventionally been achieved by bonding the briquettes using a hydraulic binder, generally cement. Briquettes made using hydrated lime and molasses are described in US-A-4 720 295.

The use of hydraulic binder systems gives satisfactory results but suffers from some disadvantages. One disadvantage is that the process is relatively slow in that the wet mix is formed and shaped and then has to be left to cure for several days.

Another disadvantage is that the particulate material needs to be relatively coarse if satisfactory strength is to be obtained using conventional binders such as cement. For instance at least 10% by weight of the particles normally have to be above 2mm or even 5mm, and frequently 30% have to be above 1mm. Satisfactory results are not obtained with hydraulic and other conventional binders when the particle size is uniformly small, for instance below 1 mm. Since the composition must melt within the furnace in a predetermined time, the relatively coarse particles must have a composition which will melt rapidly at the furnace temperature and/or must be associated with a fluxing agent. It is difficult to provide economic, relatively coarse, materials or blends that meet all these requirements, especially when it is desired that the melt should have low alumina content since many low-alumlna materials tend to have a very small particle size and a high melting point.

Another disadvantage is that the hydraulic binder contributes to the inorganic elemental analysis of the final melt and the fibres. For instance cement or clay inevitably contributes alumina to the briquettes and this is undesirable when the briquettes are to be used for the manufacture of fibres having low alumina content.

It is known that the solubility of mineral fibres in physiological saline solutions can be increased by appropriate selection of the composition of the melt. As a generality, best results at pH 7.5 are sometimes alleged when the amount of aluminium in the melt, measured as oxides, is below 3 or 4% (preferably not more than 1 or 2% by weight Al₂O₃). Accordingly, if biological solubility in saline at pH 7.5 is required the mineral material for forming the briquettes, and any additional material that is included in the charge, has to be selected so that it complies both with the required low aluminium content and with the requirement that the melt has appropriate melt properties. Thus the charge must result in a melt having appropriate melting temperature and viscosity characteristics such that the melt has appropriate fibre-forming properties. .

Many minerals that might otherwise be considered to be suitable for the manufacture of low Al₂O₃ MMV fibres have an alumina content that is sufficiently high that even if those minerals alone were used the final analysis of the MMV fibres would have an alumina value that is higher than the 3 or 4% limit that is desired. The fact that, in practice, it is necessary to add also conventional inorganic briquetting binder such as cement or alkali slag or clay places a further restriction on the particulate minerals that can be used.

it would therefore be desirable to provide briquettes which allowed simpler manufacturing procedures than existing briquetting techniques that utilise hydraulic binders, whilst ensuring that the resultant briquettes do not collapse significantly in the furnace prior to melting. It would also be desirable to provide a briquetting system that could utilise inorganic particulate materials which tend to be unsatisfactory in existing briquetting systems and/or which is particularly suitable for the production of fibres having low alumina content.

According to the invention, MMV fibres are made by a method as defined in claim 1.

The invention is applicable to the production of any MMV fibres made from a vitreous melt, such as of rock, slag, glass or other mineral melt. The particulate inorganic material from which the briquettes are formed, and the total charge, may thus be formulated so that the fibres have the desired analysis. Generally the mix from which the briquettes are formed Includes substantial amounts (measured by weight of inorganic oxides) of SiO₂ and alkaline earth and/or alkali metal oxides.

The amount of SiO₂ is generally at least 30% and often at least 38% or 40%. The total amount of alkaline earth and/or alkali metal oxides is usually above 20% and preferably above 30%. It is particularly preferred that the amount of CaO + MgO is in the range 20 to 50% and the amount of CaO is often in the range 10 to 35%. The mix may also include polyvalent metal oxides such as FeO, Al₂O₃ and TiO₂ in an amount above 1%. The amount of these polyvalent metal oxides can be as much as, for instance, 35% or 40% but is often below 15% or 20%.

When high solubility at pH 7.5 is required the amount Is generally below 10% and preferably below 5% and the Al₂O₃ content in the briquettes is preferably below 4%, most preferably below 2%. The combined amount of Na₂O and K₂O is generally not more than 6% and is preferably below 4%. The combined amount of FeO + Mgo + Cao is preferably below 50%. The total charge may also be within these ranges. A preferred composition of this type is 45-60% SiO₂, 0.5-4% Al₂O₃, 0.1-4% TiO₂, 5-12% FeO, 10-25% CaO, 8-18% MgO, 0-4% Na₂O, 0-2% K₂O, 0-6% Na₂O + K₂O, 2-10% P₂O₅ and 0-10% others.

The invention can also be usefully applied to the production of MMV fibres having higher Al₂O₃ content, for instance up to 30%. The novel briquettes may have an analysis within the same ranges.

A preferred composition for the fibres, and optionally for the briquettes, is 32-48% SiO₂, 10-30% Al₂O₃, 10-30% CaO, 2-20% MgO, 2-15% FeO, 0-10% Na₂O + K₂O, 0-6% TiO₂, 0-16% P₂O₅ + B₂O₃, and 0-15% other elements. Usually the amount of Al₂O₃ is above 18% but it can be lower, in which even the amount of P₂O₅ + B₂O₃ is usually at least 1%. Preferably SiO₂ is 34-45%, Al₂O₃ is 19-28%, CaO is 14-25% and MgO is 5-15%. SiO₂ + Al₂O₃ is often 60-75%, preferably 61-63%. The composition is preferably such that it has a viscosity at 1,400°C of 10 to 70 poise and a dissolution rate of at least 20nm per day when measured at a pH of 4.5.

The briquettes used in the invention can substantially retain their strength in the furnace until melting occurs even though the melt temperature is usually at least 1100° and often at least 1200°C. Accordingly, the charge of briquettes and optionally other solid coarse material can be provided as a self-supporting column which extends above melt in the base of the furnace and the briquettes can retain their integrity while being heated up to above the melt temperatures. Instead of collapsing to generate fines within the column of solid charge, thus significantly reducing the permeability of the charge and tending to collapse the charge, the briquettes start to collapse only at about the temperature at which significant melting starts to occur. Thus the charge does not collapse in the column above the melting region but instead retains its coarse open particulate nature until it has sunk down into the melting region in the furnace and has melted.

For instance, when the strength of various briquettes is measured under increasing temperatures, it is found that the briquettes in the invention can start to undergo significant deterioration in strength only at temperatures above 1000°C, for instance at or above 1100°C, which is about the same range as the range at which briquettes bonded with conventional hydraulic binders start to lose significant strength.

It is very surprising that the use of a combustible organic material, namely molasses, can contribute to a binder system that substantially retains it strength to temperatures above 1000 or about 1100°C. It seems that there may be some interaction between the molasses and the mixture of elements which is necessarily present in the particulate inorganic material which is included in the moist mix which is subjected to compression moulding.

The bonding agent comprises molasses, by which we mean molasses alone or reaction products of molasses with additives. It may also include a secondary binder which can be inorganic or organic. For instance the molasses binder can be used in combination with a secondary organic binder such as starch, synthetic resin such as phenolformaldehyde, or lignin (preferably calcium lignosulphonate). The molasses (including additives that react with the molasses) preferably provides at least 30% and usually at least 60% (dry weight) of the total binder system in the briquettes.

The molasses binder includes burnt lime as activator, and preferably the binder is substantially free of added phosphate or phosphoric acid or borate. However in some instances it can be desirable to include phosphate, when it is desired for the fibres to include phosphorous.

Preferably the binder consists of molasses and burnt lime with no other added activator.

The amount of lime is preferably 50 to 150% of the stoichiometric amount required for reaction between sugars in the molasses and calcium to form a sugar-calcium complex. Thus the amount of lime measured as CaO, is generally at least 0.1 parts by weight per part by weight molasses and is usually at least 0.5 parts. Generally there is no necessity for it to be more than about 0.7 parts but it can be as much as 0.9 or even 1.2 parts.

The molasses can be any conventional molasses. The content is usually around 40-55% sugars, 5-15% minerals, 20-30% water, 5-20% other organics. It is generally unnecessary, but if desired the molasses can have a higher water content, in which event the amount of molasses that is used may be increased proportionately above the amounts quoted below. The total amount of molasses is usually in the range 1 to 15%, often around 2 or 3 to 8%, most preferably about 5% based on the total weight of the mix. The amount of lime, measured as CaO, is usually in the range 1 to 10%, often 2 to 5% based on the total weight of the mix.

The total amount of free moisture in the mix at the time of compression moulding is usually in the range 0.5 to 10%, preferably around 1 to 5%, most preferably 1 to 3%, based on the total weight of the mix. Some of this moisture is provided by the molasses but the remainder may be provided associated with the particulate inorganic material or may be added as a deliberate addition of moisture.

The briquettes are normally made by mixing the particulate inorganic material and fibres (such as vegetable fibres) with the molasses and lime or other activator, allowing the resultant mix to stiffen and then moulding the mix. If a supplementary binder is being used, it is generally included as a mixture with the molasses or may be included in the mix before or after adding the molasses. The stiffening of the mix and of the binder results in the product becoming substantially uniformly tacky and more viscous and resistant to mixing, prior to moulding. The preparation of the mix for moulding is accelerated if the mix has an elevated temperature, and suitable heat rise can be provided by applying mechanical energy or heat energy to the mix and by exothermic reaction between the lime and water and/or molasses.

When the particulate inorganic material all has a desired fine particle size, the formation of the mix may be achieved merely by mixing the particulate material with the binding system, generally at a temperature in the range 20 to 70°C. However when some or all of the particulate material is too coarse, it is preferably crushed prior to or during the mixing of the molasses and this crushing generates heat energy which will cause some of the desired increase in temperature. For instance the particulate material may be simultaneously mixed, crushed and heated by use of a rod mill.

The molasses can be added and mixed into the mix in the rod mill but it is generally more convenient to form the mix of particulate material and fibres by crushing and mixing in a rod mill and then to add the molasses in a subsequent mixing stage, for instance in a traditional paddle mixer or cement mixer.

The lime can be incorporated into the mix before or after adding the molasses. For instance the lime can be included during the rod milling or other crushing stage or can be added after crushing and prior to adding molasses or can be added after adding molasses. If convenient, it can be added simultaneously with the molasses.

In a preferred process the total mix (excluding lime and molasses) is crushed in a rod mill, thereby generating a temperature rise, the mix is then transferred to a conventional mixer such as a cement mixer or other paddle mixer, the molasses is added with mixing to give a substantially homogeneous mix and then the lime is added.

The incorporation of the lime results in an exothermic reaction, for instance between calcium oxide and water. This can be utilised for reducing the free moisture content of the mix before or after adding molasses and, in particular, it can be utilised to increase the temperature of the mix to promote stiffening before moulding. For instance the use of 45 to 82% burnt lime (based on the amount of molasses) can easily cause a temperature rise to around 60°C.

The mix is maintained at an appropriate elevated temperature to allow stiffening due to reaction between molasses and lime to progress, and this may be conducted either in the initial mixer or in a pre-feeder where it is held for a few minutes (eg 1/2 to 5 or 10 minutes) before transfer to the moulding apparatus.

The moulding can be by any suitable compression technique. However it is strongly preferred that the moulding should be by means of a roller press. A roller press mould comprises a pair of rolls that rotate together to define a nip, with mould recesses in at least one of the rolls or, usually, with matching mould recesses in both of the rolls. The rolls can have a substantial axis length or may be wheels. Roller briquetting presses of this general type are well known for the purpose of pelletising animal feedstuffs or for making fuel briquettes,

The pressure applied on the mix in the mould is often in the range of 10 to 50 kN per line cm.

The dimensions of the recesses dictate the dimensions of the briquettes that are obtained. Generally each briquette has a minimum dimension of at least 5mm and usually at least 40mm. The maximum dimension can be up to, for instance, 200mm but is usually not more than 150mm. A typical size is 100mm by 50mm.

The briquettes can be discharged from the press within a few minutes of the mix being charged into the press or pre-feeder. At this stage the briquettes made in the invention have adequate green strength to allow reasonable handling immediately upon removal from the moulds. It is not necessary to heat them in an oven to achieve adequate strength. Preferably they are then allowed to stand (usually exposed to the atmosphere) for a short while, for instance ¼ to 2 hours, generally about ½ hour or up to an hour, by which time they have acquired additional strength. The briquettes can then be handled in conventional manner. Accordingly the briquettes do not require prolonged storage (as is required with conventional binders) to allow hydraulic bonding to occur but can, instead, be handled and used almost immediately after moulding.

The briquettes can be formed from particulate inorganic materials which are conventional for forming MMVF-forming briquettes although the materials can be finer than conventional and can, if desired, provide a low alumina content.

When using a hydraulic binder, it is necessary to include a significant amount of coarse material in the mix in order that the briquette has adequate strength. In the invention, however, this is not required and so the particulate material substantially can consist of material having a particle size smaller than is conventional for MMVF briquettes. Thus, although it is possible to perform the invention usefully with particulate material having size at least 90% below 2mm, preferably the size of the particulate material is less than this. For instance usually at least 98% (by weight), and preferably 100%. by weight is below 2mm. In particular, preferably at least 80%, for instance 50-80%, is below 1mm and most preferably below 0.5mm. The presence of some coarser material, eg at least 20% above 1mm, can be desirable. The particulate material is often mainly above 0.1 mm and usually mainly above 0.2mm.

The use of the relatively fine particle size has two significant advantages. First, it allows, under equal residence time and temperature conditions in the furnace, more rapid melting than is permissible with conventional coarser particle size materials and it allows the use of higher melting point materials. For instance at least 70% by weight of the components of the inorganic material may be materials with a melting point above 1450°C. Second, it allows the use of low Al₂O₃ or other materials that are readily available in a fine particulate form, notably sand. Thus, if desired, in the invention the entire particulate material in the briquettes can be sand. The fine particle size also minimises or eliminates the need to incorporate fluxing agents, and thus avoids the constraints they provide on the choice of chemical composition.

Suitable fines that can be used include stone fines (such as slag fines conventionally generated in the preparation of minerals for mineral melt production), glass waste, iron ore and used foundry sand. Various MMV waste fibrous materials, for instance that are waste from the fibre-forming process or are unused or waste final product, can be incorporated in the briquettes. Prior to the invention it has often not been possible to use MMV waste in significant amounts. Such fibrous materials include spinner waste from the spinning process and the spinning chamber, dry wool waste that is waste cured fibre products such as waste parts of slabs, rolls, pipe sections and so forth, wet wool waste which is uncured wool due to stops in the manufacturing process and other discontinuities in production, and filter mats.

Instead of or in addition to the inclusion of inorganic fibres, it is desirable to include organic fibre in the mix from which the briquettes are formed. Preferred organic fibres are vegetable (including wood) fibres, especially paper fibres seaweed fibres, citrous waste and straw. The use of straw is advantageous in that it can be introduced dry, and thus does not influence the moisture content of the mix from which the briquettes are formed whereas the other fibres may be introduced most conveniently in wet form, in which even their introduction into the mix will influence the moisture content of the mix. The use of the vegetable fibres can result in improved green strength in the briquettes and can result in satisfactory or improved green strength being attained over an increased range of moisture contents. The amount of vegetable or other organic fibres is generally from 0.2 to 10 parts, often around 0.5 to 5 parts, per part by weight molasses. The straw is usually cut or chopped to a length not more than about 5 or 10mm and this is a suitable maximum for all vegetable fibres.

The particulate mineral material for forming the briquettes may be crushed mineral material or naturally occurring fine particulate mineral material. Suitable materials are high temperature melting components such as quartz, olivine sand, limestone, dolomite, rutile, bauxite, iron ore, magnesite, magnetite, and brucite. Other conventional components for MMVF briquettes such as other slag, rock and mineral products like diabase and basalt can be used.

The mineral materials selected for forming the briquettes will be chosen having regard to the chemical analysis and melting properties that are required. Generally below 75%, and often below 20% by weight of the briquette is molten at 1250°C but usually the briquette is totally melted at 1300°C and often at 1375°C.

The mineral charge in the furnace may consist solely of the molasses bonded briquettes or some (for instance up to 70% by weight, usually not more than 50% by weight) of the mineral charge may be introduced in some other form. For instance some of the charge may include briquettes bonded in some other manner, for instance using cement, or may include conventional components for forming MMV fibre melts, such as rock, slag, glass waste and other conventional materials. If the remainder of the charge is not introduced as briquettes, it is normally introduced in a form having a particle size generally in the range 40mm to 160mm. When low alumina content is required in the final fibres, the supplementary materials will generally have a content of alumina of not more than 6% by weight, preferably below 4% and will preferably be such that the total charge has an alumina content of below 4%, preferably below 2%. When high alumina content is required, the total charge will be selected so as to yield the desired composition.

The molasses-bonded briquettes or the remainder of the charge may include components that are known to be useful to promote solubility such as phosphorous and boron compounds generally in a total amount of not more than 10 to 20% (measured as oxides).

The furnace may be any furnace in which the melt is provided by melting a self supporting column of solid coarse mineral material comprising the briquettes. This column is often at least 1 metre high. The furnace may be an electrical furnace or a tank furnace or, preferably, it is a cupola furnace in which combustible material is included in the charge. The melt temperature will depend upon the minerals being used and the fibre-forming technique but is generally in the range 1200 to 1600°C, often around 1400 to 1550°C.

Fibre formation can be by conventional techniques such as a spinning cup technique or, preferably, by pouring on to a spinner comprising at least two cooperating spinning wheels, for instance as described in WO92/06047. Thus the fibres may be made by pouring the melt on to a first spinning rotor from which the melt is thrown in sequence on to one or more subsequent spinning rotors off which the fibres are thrown.

The products of the invention can be used for any of the conventional uses of MMV fibres, such as thermal insulation, noise reduction and regulation, fire protection, growth media, reinforcement and fillers.

In each of the following examples the mineral material and the organic and inorganic waste is crushed and mixed in a rod mill. Due to the released energy from the crushing, there is a temperature rise in the rod mill. The mixture is transferred into a traditional cement mixer and the molasses is added while mixing. Within about two minutes the mixture is homogeneous and burnt lime is then added. This generates an exothermic reaction and the mixture acquires a temperature of about 60°C. The mixture is then transferred to a prefeeder and held in that for a few minutes before being transferred into the moulding cavities of a roller press In which the mix is pressed at a pressure above 20 kN per line cm into briquettes which typically have a size of 100mm by 50mm. The briquettes are discharged from this press within a few minutes of the initial mixture being charged into the prefeeder and the moulds. Upon discharge, the briquettes have a smooth shiny surface and appear to have a high density. They have a green strength such that they substantially all withstand a 2 metre drop test immediately after discharge from the moulds.

They are allowed to stand for about ½ hour. Either immediately, or after any convenient storage period, the briquettes are charged into a cupola furnace that is also charged with coke as a fuel and optionally with other coarse inorganic material. Preheated air is injected into the furnace near its base and the heating and combustion of coke caused by this initiates the melting process at the base of the column of briquettes and other charge. The process is continued with material supply such that the melt temperature is around 1,510°C. The melt runs from the furnace to the upper spinning rotor of a spinner broadly as described in WO92/06047. The resultant MMV fibres are collected as a mat and may be bonded using organic binder in a conventional manner.

In all the experiments in the invention the column of briquettes maintains a permeable structure and there is substantially no collapse of the briquettes significantly before melting. This is in contrast to what happens when thermally unstable briquettes are used in that they tend to degrade during the pre-heating, when they have a temperature of only a few hundred °C and this causes the column to be dense and relatively impermeable. This leads to an increase in pressure inside the furnace resulting in pulses of melt flowing from the outlet of the furnace. In the experiments of the invention the melt flows uniformly from the furnace outlet, indicating that the column is permeable and that a constant pressure exists within the furnace.

### Example 1

The charge is formed of 45% diabase, 7% dolomite and 48% briquettes. The briquettes have an inorganic content of 23% bauxite, 19% converter slag, 35% waste from mineral wool production, 20% fly ash and 3% burnt lime, and 5% molasses (based on the total weight of the mix) Is used as binder. The moisture content of the mix at the time of compression moulding is 9%. The fibre composition is

| | |
|---|---|
| SiO₂ | 38.7% |
| Al₂O₃ | 22.0% |
| TiO₂ | 1.9% |
| FeO | 6.8% |
| CaO | 16.9% |
| MgO | 9.1% |
| Na₂O | 1.9% |
| MnO | 0.3% |
| P₂O₃ | 0.3% |

### Example 2

The charge is formed of 45% by weight of type A briquette and 55% by weight type B briquette. Type A briquettes are made from 39% quartz sand, 16% olivine sand. 28% converter slag, 14% iron ore and 3% burnt lime, together with 5% molasses based on the total weight of the mix. These briquettes have an estimated melting temperature of about 1264°C.

The type B briquettes are formed from 38% quartz sand, 35% olivine sand, 15% apatite, 9% mineral wool production waste and 3% burnt lime, together with 5% molasses. These briquettes have a melt temperature of about 1363°C.

The analysis of the fibres is

| | |
|---|---|
| SiO₂ | 53.9% |
| Al₂O₃ | 1.8% |
| TiO₂ | 0.5% |
| FeO | 6.8% |
| CaO | 16.7% |
| MgO | 14.7% |
| Na₂O | 0.2% |
| K₂O | 0.4% |
| MnO | 0.4% |
| P₂O₅ | 3.6% |

### Example 3

The charge is formed of 45% type C briquettes and 55% type D briquettes. The type C briquettes are formed from 6% lemon waste, 14% iron ore, 3% burnt lime, 26% converter slag, 35% quartz sand and 16% olivine sand. The briquettes are bonded with 5% (based on the remainder of the mix) molasses.

The type D briquettes are formed of 15% apatite, 36% quartz sand, 37% olivine sand, 9% mineral wool production waste and 3% burnt lime, together with 5% molasses.

The resultant fibres have the composition

| | |
|---|---|
| SiO₂ | 53.2% |
| Al₂O₃ | 1.9% |
| TiO₂ | 0.5% |
| FeO | 7.6% |
| Cao | 15.5% |
| MgO | 15.5% |
| Na₂O | 0.2% |
| K₂O | 0.4% |
| MnO | 0.4% |
| P₂O₅ | 3.8% |

## Claims

1. A method of making man made vitreous fibres comprising forming compression moulded briquettes of particulate inorganic material bonded by a binder, forming a melt by melting in a furnace a mineral charge comprising a self supporting column of solid coarse mineral material comprising the briquettes, and forming vitreous fibres from the melt, **characterised in that** the compression moulded briquettes are made by mixing the particulate inorganic material, burnt lime, fibres, and molasses in an amount of 1 to 15% (by weight based on the total weight of the mixture) in the presence of moisture and thereby causing an exothermic reaction and an increase in the temperature of the mixture, allowing the mixture to stiffen, then transferring the stiffened mix to compression moulding apparatus, and forming the briquettes by compression moulding the mix in the compression moulding apparatus.

2. A method according to claim 1 which the moulding of the briquettes is by compression moulding at 10 to 50 kN/cm.

3. A method according to either preceding claim in which the moulding of the briquettes is by roller moulding.

4. A method according to any preceding claim in which the particulate mineral material has a size at least 90% below 2mm and the compression-moulded briquettes provide at least 50% by weight of the charge in the furnace.

5. A method according to any preceding claim in which the furnace is a cupola furnace.

6. A method according to any preceding claim in which the charge and the fibres have a content (measured by weight of oxides) of below 4% Al₂O₃, above 30% SiO₂ and 20 to 50% CaO + MgO.

7. A method according to any preceding claim in which the melt and the fibres have a content, measured as oxides, of below 4% by weight Al₂O₃, and at least 50% by weight of the mineral charge is molasses bonded briquettes which have a content of below 4% Al₂O₃, and the process comprises forming the briquettes by compression moulding a mix of particulate mineral material having a size at least 90% by weight below 2mm and which includes lime, MMVF fibres and binder which is substantially free of aluminium and which comprises molasses.

8. A method according to any preceding claims in which the amount of lime measured as CaO is 0.1 to 1 part by weight per part by weight molasses.

9. A method according to any preceding claim in which the fibres are selected from organic fibres and inorganic fibres and mixed thereof.

10. A method according to claim 9 in which the organic fibres include vegetable fibres in an amount of 0.2 to 10 parts by weight per part weight molasses.

11. A method according to claim 9 or claim 10 in which the organic fibres are selected from paper fibres, seaweed fibres, citrus waste and straw.

12. A method according to any of claims 9 to 11 in which the inorganic fibres include MMV fibres.

13. A method according to any preceding claim in which the fibres have a content, measured by weight of oxides, of 45-60% SiO₂, 0.5-4% Al₂O₃, 0.1-4% TiO₂, 5-12% FeO, 10-25% CaO, 8-18% MgO, 0-4% Na₂O, 0-2% K₂O, 0-6% Na₂O + K₂O, 2-10% P₂O₅ and 0-10% others.

14. A method according to claim 1 in which the fibres contain, measured by weight of oxides, 32-48% SiO₂, 10-30% Al₂O₃, 10-30% CaO, 2-20% MgO, 2-15% FeO, 0-10% Na₂O + K₂O, 0-6% TiO₂ 0-16% P₂O₅ + B₂O₃ and 0-15% other elements.

15. A method according to any preceding claim in which the MMV fibres are made by pouring the melt from the furnace on to a first spinning rotor from which the melt is thrown in sequence on to one or more subsequent spinning rotors off which the fibres are thrown.

## Patentansprüche

1. Verfahren zur Herstellung von künstlichen glasartigen Fasern, umfassend das Bilden von gepressten Briketts aus durch ein Bindemittel gebundenem teilchenförmigem anorganischem Material, Bilden einer Schmelze durch Schmelzen in einem Ofen einer mineralischen Charge, die eine selbsttragende Säule aus festem grobem mineralischem Material, das die Briketts umfasst, und Bilden von glasartigen Fasern aus der Schmelze, **dadurch gekennzeichnet, dass** die gepressten Briketts hergestellt werden durch Mischen des teilchenförmigen anorganischen Materials, gebranntem Kalk, Fasern und Melasse in einer Menge von 1 bis 15% (bezogen auf das Gewicht auf Basis des Gesamtgewichts der Mischung) in Gegenwart von Feuchtigkeit und dadurch Hervorrufen einer exothermen Reaktion und eines Anstiegs der Temperatur der Mischung, Erstarrenlassen der Mischung, dann Befördern der erstarrten Mischung in eine Pressformmaschine und Bilden der Briketts durch Pressen der Mischung in der Pressformmaschine.

2. Verfahren nach Anspruch 1, worin das Formen der Briketts durch Formpressen bei 10 bis 50 kN/cm erfolgt.

3. Verfahren nach irgendeinem vorhergehenden Anspruch, worin das Formen der Briketts durch Walzen erfolgt.

4. Verfahren nach irgendeinem vorhergehenden Anspruch, worin mindestens 90% des teilchenförmigen mineralischen Materials eine Größe unter 2 mm aufweisen und die gepressten Briketts mindestens 50 Gew.-% der Charge in dem Ofen ausmachen.

5. Verfahren nach irgendeinem vorhergehenden Anspruch, worin der Ofen ein Kupolofen ist.

6. Verfahren nach irgendeinem vorhergehenden Anspruch, worin die Charge und die Fasern einen Gehalt (gemessen als Oxidgewicht) von unter 4% Al₂O₃, über 30% SiO₂ und 20 bis 50% CaO + MgO aufweisen.

7. Verfahren nach irgendeinem vorhergehenden Anspruch, worin die Schmelze und die Fasern einen Gehalt, gemessen als Oxide, von unter 4 Gew.-% Al₂O₃ aufweisen und es sich bei mindestens 50 Gew.-% der mineralischen Charge um durch Melasse gebundene Briketts handelt, die einen Gehalt von unter 4% Al₂O₃ aufweisen, und das Verfahren das Bilden der Briketts durch Pressen einer Mischung von teilchenförmigem mineralischem Material umfasst, bei dem mindestens 90 Gew.-% eine Größe von unter 2 mm aufweisen und welches Kalk, MMVF-Fasern und Bindemittel beinhaltet, welches im wesentlichen frei von Aluminium ist und Melasse umfasst.

8. Verfahren nach irgendeinem vorhergehenden Anspruch, worin die als CaO gemessene Menge an Kalk 0,1 bis 1 Gewichtsteil pro Gewichtsteil Melasse beträgt.

9. Verfahren nach irgendeinem vorhergehenden Anspruch, worin die Fasern aus organischen Fasern und anorganischen Fasern und Mischungen davon ausgewählt sind.

10. Verfahren nach Anspruch 9, worin die organischen Fasern Pflanzenfasern in einer Menge von 0,2 bis 10 Gewichtsteilen pro Gewichtsteil Melasse beinhalten.

11. Verfahren nach Anspruch 9 oder Anspruch 10, worin die organischen Fasern aus Papierfasern, Meerespflanzenfasern, Citrusabfall und Stroh ausgewählt sind.

12. Verfahren nach irgendeinem der Ansprüche 9 bis 11, worin die anorganischen Fasern MMV-Fasern beinhalten.

13. Verfahren nach irgendeinem vorhergehenden Anspruch, worin die Fasern einen Gehalt, gemessen als Oxidgewicht, von 45 bis 60% SiO₂, 0,5 bis 4% Al₂O₃, 0,1 bis 4% TiO₂, 5 bis 12% FeO, 10 bis 25% CaO, 8 bis 18% MgO, 0 bis 4% Na₂O, 0 bis 2% K₂O, 0 bis 6% Na₂O + K₂O, 2 bis 10% P₂O₅ und 0 bis 10% anderer Stoffe aufweisen.

14. Verfahren nach Anspruch 1, worin die Fasern, gemessen als Oxidgewicht, 32 bis 48% SiO₂, 10 bis 30% Al₂O₃, 10 bis 30% CaO, 2 bis 20% MgO, 2 bis 15% FeO, 0 bis 10% Na₂O + K₂O, 0 bis 6% TiO₂, 0 bis 16% P₂O₅ + B₂O₃ und 0 bis 15% andere Elemente enthalten.

15. Verfahren nach irgendeinem vorhergehenden Anspruch, worin die MMV-Fasern gebildet werden durch Gießen der Schmelze aus dem Ofen auf einen ersten sich drehenden Rotor, von dem die Schmelze nacheinander auf einen oder mehrere nachfolgende sich drehende Rotoren geschleudert wird, von welchen die Fasern abgeschleudert werden.

## Revendications

1. Procédé de fabrication de fibres vitreuses synthétiques, comprenant la formation de briquettes moulées par compression en matériau inorganique particulaire lié par un liant, la formation d'une masse fondue en faisant fondre dans un four une charge minérale comprenant une colonne auto-supportée d'un matériau minéral grossier solide comprenant les briquettes, et la formation de fibres vitreuses à partir de la masse fondue, **caractérisé en ce que** les briquettes moulées par compression sont fabriquées en mélangeant le matériau inorganique particulaire, de la chaux calcinée, des fibres et des molasses en une quantité de 1 à 15 % (en poids par rapport au poids total du mélange) en présence d'humidité, et en provoquant ainsi une réaction exothermique et une élévation de la température du mélange, en laissant le mélange se raidir, puis en transférant le mélange raidi dans un appareil de moulage par compression et en formant les briquettes par moulage par compression du mélange dans l'appareil de moulage par compression.

2. Procédé selon la revendication 1, dans lequel le moulage des briquettes se fait par moulage par compression à de 10 à 50 kN/cm.

3. Procédé selon l'une quelconque des revendications précédentes, dans lequel le moulage des briquettes se fait par un moulage au rouleau.

4. Procédé selon l'une quelconque des revendications précédentes, dans lequel le matériau minéral particulaire présente une taille pour au moins 90% inférieure à 2 mm et les briquettes moulées par compression fournissent au moins 50% en poids de la charge dans le four.

5. Procédé selon l'une quelconque des revendications précédentes, dans lequel le four est un four de fonderie.

6. Procédé selon l'une quelconque des revendications précédentes, dans lequel la charge et les fibres présentent une teneur (mesurée en poids d'oxydes) inférieure à 4% de Al₂O₃, supérieure à 30% de SiO₂ et de 20 à 50% de CaO + MgO.

7. Procédé selon l'une quelconque des revendications précédentes, dans lequel la masse fondue et les fibres présentent une teneur, mesurée en oxydes, inférieure à 4% en poids de Al₂O₃ et au moins 50% en poids de la charge minérale est constituée de briquettes liées par des mélasses qui présentent une teneur inférieure à 4% de Al₂O₃ et le procédé comprend la formation des briquettes par moulage par compression d'un mélange de matériau minéral particulaire ayant une taille pour au moins 90% en poids inférieure à 2 mm et qui comprend de la chaux, des fibres MMVF, et un liant qui est pratiquement exempt d'aluminium et qui comprend des mélasses.

8. Procédé selon l'une quelconque des revendications précédentes, dans lequel la quantité de chaux mesurée sous forme de CaO est de 0,1 à 1 partie en poids par partie en poids des mélasses.

9. Procédé selon l'une quelconque des revendications précédentes, dans lequel les fibres sont choisies parmi des fibres organiques et des fibres inorganiques et des mélanges de celles-ci.

10. Procédé selon la revendication 9, dans lequel les fibres organiques comprennent des fibres végétales en une quantité de 0,2 à 10 parties en poids par partie en poids des mélasses.

11. Procédé selon la revendication 9 ou la revendication 10, dans lequel les fibres organiques sont choisies parmi des fibres de papier, des fibres d'algues marines, des déchets de citron et de la paille.

12. Procédé selon l'une quelconque des revendications 9 à 11, dans lequel les fibres inorganiques comprennent des fibres MMV.

13. Procédé selon l'une quelconque des revendications précédentes, dans lequel les fibres présentent une teneur, mesurée en poids d'oxydes, de 45-60% de SiO₂, de 0,5-4% d'Al₂O₃, de 0,1-4% de TiO₂, de 5-12% de FeO, de 10-25% de CaO, de 8-18% de MgO, de 0-4% de Na₂O, de 0-2% de K₂O, de 0-6% de Na₂O + K₂O, de 2-10% de P₂O₅ et de 0-10% d'autres.

14. Procédé selon la revendication 1, dans lequel les fibres contiennent, mesuré en poids d'oxydes, 32-48% de SiO₂, 10-30% de Al₂O₃, 10-30% de CaO, 2-20% de MgO, 2-15% de FeO, 0-10% de Na₂O + K₂O, 0-6% de TiO₂, 0-16% de P₂O₅ + B₂O₃ et 0-15% d'autres éléments.

15. Procédé selon l'une quelconque des revendications précédentes, dans lequel les fibres MMV sont fabriquées en versant la masse fondue à partir du four sur un premier rotor de filage à partir duquel la masse fondue est projetée successivement sur un ou plusieurs rotors de filage successifs à partir desquels les fibres sont projetées.
